# EUROPEAN PATENT APPLICATION

(11) **EP 4 624 671 A1**
(43) Date of publication of application: **01.10.2025**
(21) Application number: 24213182.9
(22) Date of filing: 15.11.2024
(51) Int. Cl.: E02F 3/32, E02F 9/08, E02F 9/20, F04B 17/03, E02F 9/22

(54) **WORKING VEHICLE**

(30) Priority: 29.03.2024 JP 2024057108
(71) Applicant: Takeuchi MFG. Co., Ltd., Hanishina-gun, Nagano 389-0605 (JP)
(72) Inventor: Ooyama, Hidaka, Nagano 389-0605 (JP)
(74) Representative: Liesegang, Eva

(57) **Abstract**

Provided is a working vehicle that effectively uses a space in an equipment housing chamber. The working vehicle includes: a hydraulic pump; an electric motor for driving the hydraulic pump; and an equipment housing chamber that houses the hydraulic pump and the electric motor. An output shaft of the electric motor is connected to an input shaft of the hydraulic pump. The electric motor is disposed either in an upward direction or in a downward direction with respect to the hydraulic pump.

## Description

### [Technical Field]

The present invention relates to a working vehicle.

### [Background Art]

In a field of a working vehicle such as a construction equipment, an electrically operated working vehicle that performs a work and travels using an electric motor as a drive source has been popularly used recently. The electric motor is mounted on the electrically operated working vehicle.

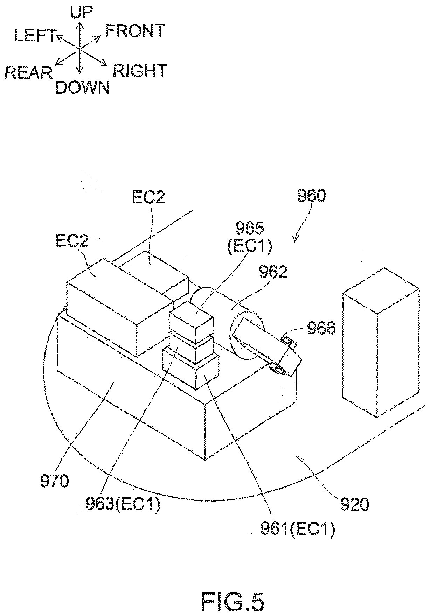

Fig. 5 is a view illustrating the arrangement of equipment disposed in the inside of an equipment housing chamber (an engine compartment) 960 of a working vehicle described in Japanese Laid-open patent publication JP-A-2023-81617. In Fig. 5, a cover of the equipment housing chamber 960 is omitted.

In the working vehicle described in Japanese Laid-open patent publication JP-A-2023-81617, the equipment housing chamber 960 is disposed on a slew frame 920 of an upper slew body. In the inside of the equipment housing chamber 960, an electric motor 962, a hydraulic pump 966, a first electric part EC1 (a charger 961, an inverter 963, a DC-DC converter 965), a second electric part EC2 are disposed. Further, in the equipment housing chamber 960, a battery unit 970 that stores electricity for driving the electric motor 962 is disposed.

An output shaft (not illustrated in the drawing) of the electric motor 962 is connected to an input shaft (not illustrated in the drawing) of the hydraulic pump 966. As illustrated in Fig. 5, the electric motor 962 and the hydraulic pump 966 are arranged side by side in the lateral direction of the working vehicle on the battery unit 970. Further, the first electric part EC1 and the second electric part EC2 are also disposed on the battery unit 970.

According to Japanese Laid-open patent publication JP-A-2023-81617, there is a description that even in a case where the battery unit 970 having a large capacity (a large size) is used, it is possible to provide the working vehicle that can favorably maintain a machine body balance of the working vehicle.

### [Citation List]

### [Patent literature]

[Patent literature 1] JP-A-2023-81617

### [Summary of Invention]

### [Technical Problem]

However, with respect to the arrangement of the equipment in the equipment housing chamber of the working vehicle described in Japanese Laid-open patent publication JP-A-2023-81617, particularly, the arrangement of the electric motor and the hydraulic pump is under a situation where it is hard to say that the space in the equipment housing chamber is effectively used. Particularly, in a case where the working vehicle is a small-sized working vehicle, lengths of an equipment housing chamber both in a longitudinal direction and in a lateral direction are limited. Accordingly, in an attempt to arrange the electric motor and the hydraulic pump in the equipment housing chamber such that the electric motor and the hydraulic pump are connected to each other and the direction of an output shaft of the electric motor is directed in the horizontal direction, there exists a drawback that a case is considered where the electric motor and the hydraulic pump cannot be housed in the equipment housing chamber.

The present invention has been made in view of such circumstances, and it is an object of the present invention to provide a working vehicle that can effectively make use of a space in an equipment housing chamber.

### [Solution to problem]

[1] A working vehicle according to the present disclosure includes: a hydraulic pump; an electric motor for driving the hydraulic pump; and an equipment housing chamber that houses the hydraulic pump and the electric motor. An output shaft of the electric motor is connected to an input shaft of the hydraulic pump. The electric motor is disposed either in an upward direction or in a downward direction with respect to the hydraulic pump.
[2] In the working vehicle according to the present disclosure, it is preferred that the electric motor is disposed above the hydraulic pump.
[3] In the working vehicle according to the present disclosure, it is preferred that the working vehicle further includes a bracket for mounting the electric motor thereon, and that the electric motor is mounted on the bracket.
[4] In the working vehicle according to the present disclosure, it is preferred that the working vehicle further includes an inverter that controls the electric motor, and that the inverter is mounted on the bracket.
[5] In the working vehicle according to the present disclosure, it is preferred that the hydraulic pump includes a plurality of hydraulic pumps, and that the hydraulic pumps are connected in series.

The working vehicle according to the present invention includes: the hydraulic pump; the electric motor; and the equipment housing chamber that houses the hydraulic pump and the electric motor. The output shaft of the electric motor is connected to the input shaft of the hydraulic pump. The electric motor is disposed either in an upward direction or in a downward direction with respect to the hydraulic pump.

In such a configuration, with respect to the size of an electric motor and hydraulic pump connected unit that is a connected body of the electric motor and the hydraulic pump formed by connecting the electric motor and the hydraulic pump, usually, the length of the electric motor and hydraulic pump connected unit has the largest length in the direction that the output shaft of the electric motor and the input shaft of the hydraulic pump (hereinafter "the output shaft of the electric motor and the input shaft of the hydraulic pump" being also referred to as "rotary shaft") extend, although it depends on a kind of electric motor and a kind of hydraulic pump in use.

Accordingly, in a case where a length of the equipment housing chamber in the lateral direction and a length of the equipment housing chamber in the longitudinal direction are limited, by arranging the electric motor and hydraulic pump connected unit such that the direction of the rotary shaft having the longest length becomes the vertical direction of the working vehicle, the electric motor and hydraulic pump connected unit can be housed in the equipment housing chamber. That is, according to the present invention, it is possible to provide working vehicle that can effectively use the space extending in the vertical direction in the equipment housing chamber.

### [Brief Description of Drawings]

Fig. 1 is a view illustrating a working vehicle 1 according to an embodiment, and is an external perspective view of the working vehicle 1 as viewed from an oblique front side.
Fig. 2 is a view illustrating a working vehicle 1 according to the embodiment, and is an external perspective view of the working vehicle 1 as viewed from an oblique rear side.
Fig. 3 is a view illustrating an equipment housing chamber 59 of the working vehicle 1 according to the embodiment, and is a view of the equipment housing chamber 59 as viewed from a front side.
Fig. 4 is a view illustrating an equipment housing chamber 59 of the working vehicle 1 according to the embodiment, and is a view of the equipment housing chamber 59 as viewed from an oblique front side.
Fig. 5 is a view illustrating a working vehicle illustrated in Japanese Laid-open patent publication JP-A-2023-81617.

### [Description of embodiments]

Hereinafter, a mode for carrying out the present invention (hereinafter referred to as "embodiment") is described. The embodiment described hereinafter illustrates a preferred mode for carrying out the invention, and is not intended to limit the invention described in claims. Further, it is not always the case that all of various elements and combinations of these elements described in the embodiment are indispensable in the present invention.

### 1. Working vehicle

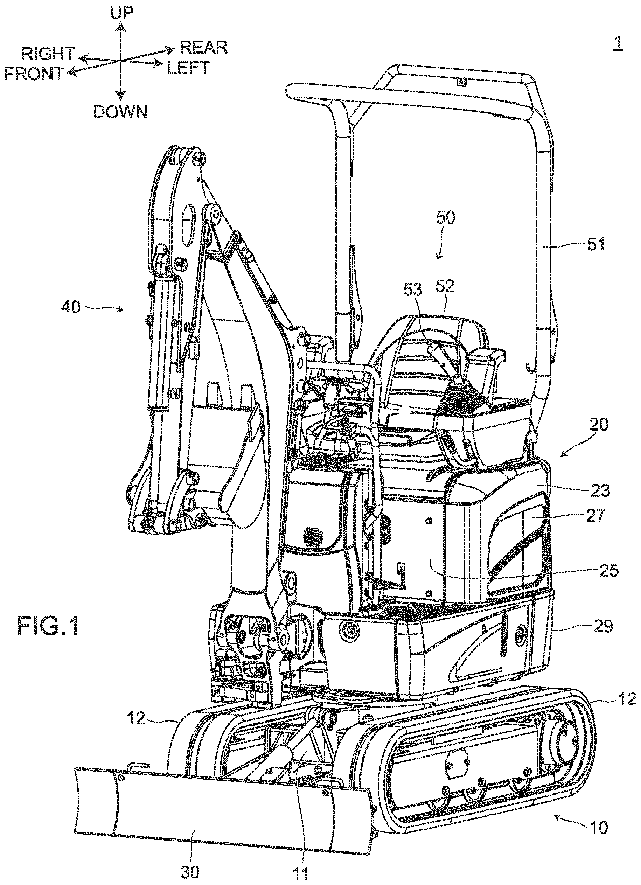

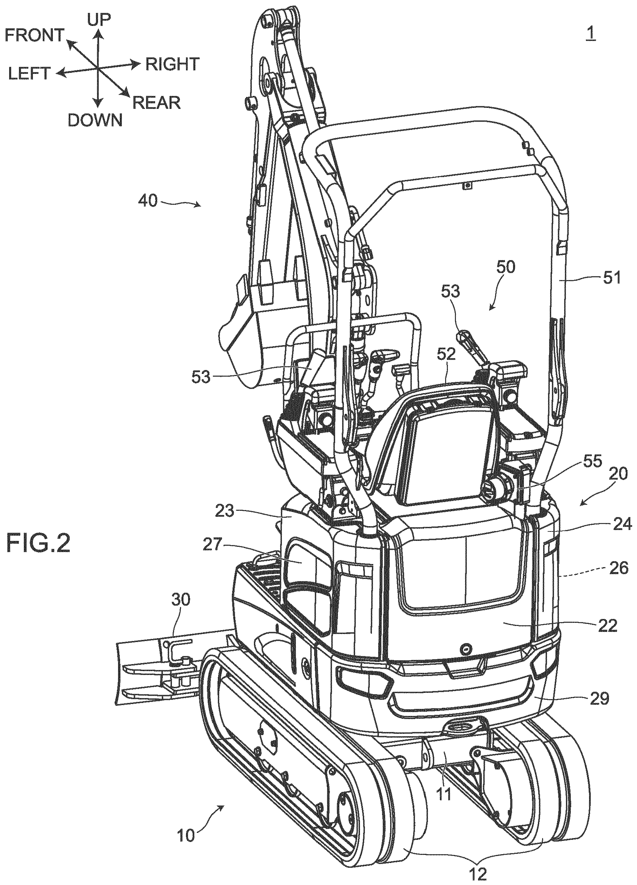

Hereinafter, a working vehicle 1 according to an embodiment of the present invention is described with reference to drawings. In the embodiment described hereinafter, the description is made by taking a crawler-type hydraulic excavator as an example of the working vehicle 1. First, the external configuration of the working vehicle 1 according to the embodiment is described with reference to Fig. 1 and Fig. 2. The external configuration of the working vehicle 1 according to the embodiment does not constitute the gist of the present invention and hence, the external configuration is simply described schematically. Further, in the respective drawings used for describing the embodiment, the same symbols are used to members having the identical functions, and there may be a case where the repeated explanation of the members is omitted.

Further, in a case where it is necessary to indicate the left and the right, the front and the rear and the up and the down of the working vehicle 1 in describing the working vehicle 1 according to the embodiment, the side on which a blade 30 is mounted on the working vehicle 1 is assumed as "the front", and the side opposite to the side on which the blade 30 is mounted is referred to as "the rear". Further, the side of a left side surface of the working vehicle 1 when the working vehicle 1 is viewed from a rear side is assumed as "the left" and, similarly, the side of a right side surface of the working vehicle 1 when the working vehicle 1 is viewed from the rear side is assumed as "the right". Further, a bottom portion side of the working vehicle 1 is assumed as "the down", and a side opposite to the bottom portion is assumed as "the up".

Fig. 1 is a view illustrating the working vehicle 1 according to the embodiment, and is an external perspective view of the working vehicle 1 as viewed from an oblique front side. Fig. 2 is a view illustrating a working vehicle 1 according to the embodiment, and is an external perspective view of the working vehicle 1 as viewed from an oblique rear side. Fig. 1 and Fig. 2 are the external perspective views where the left side surface of the working vehicle 1 can be observed visually.

As illustrated in Fig. 1 and Fig. 2, the working vehicle 1 includes: a lower traveling body 10; an upper slew body 20 that is mounted on an upper portion of the lower traveling body 10 in a turnable manner; the blade 30 that is mounted on a front portion of the lower traveling body 10; and a working equipment 40 that is mounted on a front portion of the upper slew body 20.

The lower traveling body 10 has a pair of left and right crawlers 12 on both left and right sides of a frame 11. The blade 30 that is vertically swingable is mounted on the frame 11. A slew mechanism (not illustrated in the drawing) is mounted at an approximately center portion of an upper portion of the frame 11. The upper slew body 20 can be slewed on a horizontal plane by the slew mechanism. The lower traveling body 10, the upper slew body 20, the blade 30 and the working equipment 40 are driven by hydraulic actuators (hydraulic pump, hydraulic cylinder and the like) corresponding to the above-mentioned elements.

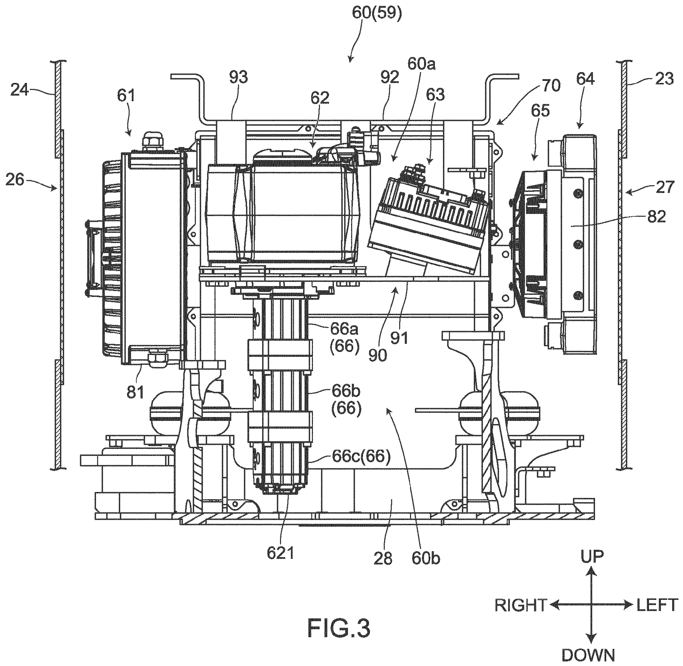

An upper surface, a rear surface, a left side surface, right side surface and a front surface of the upper slew body 20 are covered by covers corresponding to these surfaces respectively. A region that is covered by the covers constitutes an equipment housing chamber 59 (see Fig. 3). In this embodiment, the cover that covers an upper surface and a rear surface of the equipment housing chamber 59 is referred to as a battery cover 22 (see Fig. 2). Covers that cover a left side surface, a right side surface and a front surface of the equipment housing chamber 59 are referred to as a left side surface cover 23, a right side surface cover 24 (see Fig. 2) and a front surface cover 25 (see Fig. 1) respectively. The equipment housing chamber 59 is constituted as the region surrounded by the battery cover 22, the left side surface cover 23, the right side surface cover 24, and the front surface cover 25.

A canopy-type operator chamber 50 is mounted on the equipment housing chamber 59. In the canopy-type operator chamber 50, a canopy-pole 51, an operator seat 52 and an operating lever 53 are mounted. Further, a counterweight 29 (see Fig. 2) that forms a portion of a rear surface is mounted on a lower portion of a rear surface of the upper slew body 20.

### 2. Equipment housing chamber and arrangement of equipment in equipment housing chamber

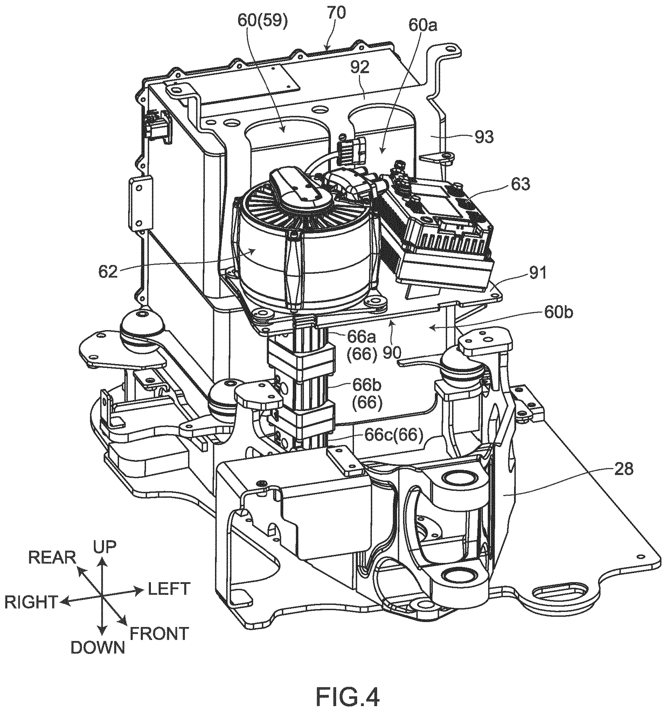

Fig. 3 is a view illustrating the equipment housing chamber 59 of the working vehicle 1 according to the embodiment, and is a view of the equipment housing chamber 59 as viewed from a front side. Fig. 4 is a perspective view illustrating the equipment housing chamber 59 when the working vehicle 1 according to the embodiment is viewed from an oblique front side.

As described above, the equipment housing chamber 59 is formed as the region that is surrounded by the battery cover 22 in the upper slew body 20 (see Fig. 2), the left side surface cover 23 (see Fig. 1 and Fig. 2), the right side surface cover 24 (see Fig. 2), and the front surface cover 25 (see Fig. 1). In Fig. 3, among these respective covers, a portion of the left side surface cover 23 and a portion of the right side surface cover 24 are illustrated in cross section. In Fig. 4, the illustration of these respective covers is omitted.

An air intake port 26 that allows air to flow into the equipment housing chamber 59 as cooling air is formed in the right side surface cover 24. An air discharge port 27 through which cooling air is discharged from the equipment housing chamber 59 is formed in the left side surface cover 23.

In the equipment housing chamber 59 as illustrated in Fig. 3 and Fig. 4, equipment such as a vehicle mounted charger 61, an electric motor 62, an inverter 63, a hydraulic pump 66 and a battery unit 70 are housed. In the equipment housing chamber 59, pressurized oil pipes, electric wirings and the like are also housed. In Fig. 3 and Fig. 4, the illustration of the pressurized oil pipes and the electric wirings is omitted.

The electric motor 62 is disposed such that an output shaft extends in downward direction (see Fig. 3). The electric motor 62 is mounted on a horizontal plate 91 of a third bracket 90. The output shaft of the electric motor 62 penetrates the horizontal plate 91, and extends downward from the horizontal plate 91. The output shaft that extends downward from the horizontal plate 91 is connected to the input shaft of the hydraulic pump 66. The third bracket 90 and the horizontal plate 91 are described later.

The working vehicle 1 according to the embodiment includes, as illustrated in Fig. 3 and Fig. 4, three hydraulic pumps 66a, 66b, 66c are provided as a plurality of hydraulic pumps.

The respective hydraulic pumps 66a, 66b, 66c are connected with a hydraulic oil tank not illustrated in the drawings. The hydraulic oil tank stores a pressurized oil (a hydraulic oil). With the actuation of the respective hydraulic pumps 66a, 66b, 66c, the hydraulic oil in the hydraulic oil tank is supplied to the hydraulic actuators by way of a control valves not illustrated in the drawings. The pressurized oil supplied to the hydraulic actuators operates the lower traveling body 10, the upper slew body 20, the blade 30, and the working equipment 40.

The number of the hydraulic pumps 66 that the working vehicle 1 includes is not limited to three. The number of the hydraulic pumps 66 can be set to the suitable number corresponding to the number of the hydraulic actuators that the working vehicle 1 includes.

The hydraulic pumps 66a, 66b, 66c are, as illustrated in Fig. 3 and Fig. 4, connected in series. Further, the hydraulic pumps 66a, 66b, 66c are disposed side by side in the vertical direction in the working vehicle 1.

The electric motor 62 is disposed at either an upper side or a lower side in the vertical direction with respect to the hydraulic pumps 66. In this embodiment, the size of an electric motor and hydraulic pump connected unit depends on a kind of the electric motor 62 in use and a kind of the hydraulic pumps 66 in use. However, usually, the electric motor and hydraulic pump connected unit has the largest length in the direction that the output shaft of the electric motor 62 and the input shaft of the hydraulic pump 66 (hereinafter "the output shaft of the electric motor 62 and the input shaft of the hydraulic pump 66" being also referred to as "a rotary shaft 621") extend.

In a case where a length of the equipment housing chamber 59 in the lateral direction and a length of the equipment housing chamber 59 in the longitudinal direction are limited, by adopting an arrangement where the electric motor and hydraulic pump connected unit is directed in such a direction that the rotary shaft 621 having the longest length is directed in the vertical direction of the working vehicle 1, the electric motor and hydraulic pump connected unit can be housed in the equipment housing chamber 59. That is, according to the present invention, it is possible to provide working vehicle 1 that can effectively use the space extending in the vertical direction in the equipment housing chamber 59.

Particularly, in a case where the working vehicle 1 is a small-sized working vehicle, it is often the case that the length of the equipment housing chamber 59 in the longitudinal direction and the length of the equipment housing chamber 59 in the lateral direction are limited. Also in such a case, by arranging the rotary shaft 621 of the electric motor 62 in the vertical direction with respect to the working vehicle 1, the rotary shaft 621 of the electric motor 62 and the hydraulic pump 66 can be housed in the equipment housing chamber 59 while maintaining the connection between the electric motor 62 and the hydraulic pump 66.

In the working vehicle 1, the electric motor 62 is disposed above the hydraulic pump 66 in the equipment housing chamber 59. According to the working vehicle 1 of the embodiment, it is possible to suppress the electric motor 62 from being smeared by oil that adheres to the hydraulic pump 66 or hydraulic piping not illustrated in the drawing.

The inverter 63 is an equipment that converts a direct current supplied from the battery unit 70 into an alternating current and supplies the alternating current to the electric motor 62. As illustrated in Fig. 3 and Fig. 4, the inverter 63 is mounted on a horizontal plate 91 of the third bracket 90.

The vehicle mounted charger 61 converts an alternating current supplied from a commercially available power source via an electricity supply cable not illustrated in the drawing into a direct current.

The oil cooler 64 is a cooling equipment that cools a hydraulic oil for driving the hydraulic actuator.

The cooling fan 65 allows cooling air to flow, from an upstream side of the cooling air, through the vehicle mounted charger 61, the electric motor 62, the inverter 63, and the oil cooler 64 in this order. In the working vehicle 1 according to the embodiment, assume that the cooling fan 65 is attached to the oil cooler 64. Accordingly, in Fig. 3, the cooling fan 65 is illustrated as the structure where the cooling fan 65 is integrally formed with the oil cooler 64.

The battery unit 70 is formed of a lithium ion battery unit, for example. The battery unit 70 stores electricity for driving the electric motor 62. The battery unit 70 may be constituted of a plurality of battery cells that are formed as a unit. Alternatively, the battery unit 70 may be constituted of a single battery cell. It is preferred that the battery unit 70 is configured such that a plurality of batteries are formed as a unit, and be housed in one case.

A charging port 55 is provided to the upper slew body 20. The charging port 55 and a commercially available power source that is an external power source are connected to each other via an electricity supply cable. With such a configuration, it is possible to supply electricity to the battery unit 70.

The working vehicle 1 has, in the equipment housing chamber 59, brackets for mounting the equipment. As such brackets, a bracket (a first bracket 81) for mounting the vehicle-mounted charger 61, a bracket (a second bracket 82) for mounting an oil cooler 64, and a bracket (a third bracket 90) for mounting the electric motor 62 and the inverter 63 can be exemplified. These brackets are mounted on an upper portion of a body frame 28 by a fixing means such as bolts.

The electric motor 62 and the inverter 63 are disposed on the third bracket 90. As illustrated in Fig. 4, the third bracket 90 is an integral body formed of: a horizontal plate 91 that extends frontward, a horizontal plate 92 that extends rearward (referred to as "an auxiliary horizontal plate 92"); and a vertical plate 93 that is interposed between the horizontal plate 91 and the auxiliary horizontal plate 92.

The electric motor 62 is mounted on the third bracket 90. That is, with respect to a space 60 defined in the equipment housing chamber 59, the electric motor 62 is housed in an upper region 60a of the space 60 that is formed above the third bracket 90. On the other hand, the hydraulic pump 66 is housed in a lower region 60b of the space 60 in the equipment housing chamber 59 that is formed below the third bracket 90.

That is, the electric motor 62 housed in the upper region 60a and the hydraulic pump 66 housed in the lower region 66b are disposed with the third bracket 90 sandwiched therebetween. With such a configuration, when an oil leakage occurs in the hydraulic pump 66, it is possible to more effectively prevent the occurrence of a state that oil adhering to the hydraulic pump 66 from adhering to the electric motor 62. As a result, the reliability of the electric motor 62 can be enhanced.

A through hole not illustrated in the drawing is formed in the horizontal plate 91. The through hole 91 is formed so as to allow a rotary shaft 621 of the electric motor 62 to pass therethrough. With such a configuration, while enabling the connection of an output shaft of the electric motor 62 to an input shaft of the hydraulic pump 66, it is also possible to suppress oil adhering to the hydraulic pump 66 from adhering to the electric motor 62.

As illustrated in Fig. 3 and Fig. 4, the inverter 63 is mounted on the horizontal plate 91 of the third bracket 90.

By mounting the inverter 63 on the third bracket 90, the inverter 63 is housed in the same upper region 60a as the electric motor 62. With such a configuration, it is possible to suppress oil adhering to the hydraulic pump 66 from adhering to the inverter 63. As a result, the reliability of the inverter 63 can be enhanced.

Further, by mounting the electric motor 62 and the inverter 63 on the third bracket 90 and by assembling the hydraulic pump 66 below the third bracket 90, the electric motor 62, the inverter 63 and the hydraulic pump 66 can be formed into an assembly.

Electric wiring is connected between the electric motor 62 and the inverter 63 in advance. The assembly in such a state is mounted on the working vehicle 1, and a hydraulic piping is connected to the hydraulic pump 66, and an electric wiring from the inverter 63 is connected to the battery unit 70. With such a configuration, the assembling property of these parts to the working vehicle 1 is enhanced.

Hereinafter, advantageous effects acquired by the working vehicle 1 according to the embodiment are described.
[1] The working vehicle 1 according to the embodiment includes, the hydraulic pump 66, the electric motor 62, and the equipment housing chamber 59 that houses the hydraulic pump 66 and the electric motor 62. The output shaft of the electric motor 62 is connected to the input shaft of the hydraulic pump 66. Further, the electric motor 62 is disposed either in the upward direction or in the downward direction with respect to the hydraulic pump 66.

In such a configuration, with respect to the size of the electric motor and hydraulic pump connected unit that is a connected body of the electric motor 62 and the hydraulic pump 66 formed by connecting the electric motor 62 and the hydraulic pump 66, usually, the length of the electric motor and hydraulic pump connected unit in the direction that the rotary shaft 621 extends is the longest, although it depends on a kind of the electric motor 62 and a kind of the hydraulic pump 66 in use.

Accordingly, to consider a case where the length of the equipment housing chamber 59 in the lateral direction and the length of the equipment housing chamber 59 in the longitudinal direction are restricted, in the electric motor and hydraulic pump connected unit, by arranging the electric motor and hydraulic pump connected unit such that the direction of the rotary shaft 621 that the length of the electric motor and hydraulic pump connected unit has the largest length is the vertical direction of the working vehicle 1, the electric motor and hydraulic pump connected unit can be housed in the equipment housing chamber 59. That is, according to the working vehicle 1 of this embodiment, the space in the equipment housing chamber 59 in the vertical direction can be effectively used.
[2] In the working vehicle 1 according to the embodiment, in a preferred mode, the electric motor 62 is disposed above the hydraulic pump 66 in the equipment housing chamber 59. With such a configuration, it is possible to prevent the electric motor 62 from being smeared by oil adhering to the hydraulic pump 66 and the hydraulic piping not illustrated in the drawings.
[3] In the working vehicle 1 according to the embodiment, in a preferred mode, the working vehicle 1 further includes the third bracket 90 on which the electric motor 62 is mounted.

The electric motor 62 is housed in the upper region 60a of the space 60 in the equipment housing chamber 59 formed above the third bracket 90. On the other hand, the hydraulic pump 66 is housed in the lower region 60b of the space 60 in the equipment housing chamber 59 formed below the third bracket 90. That is, the electric motor 62 housed in the upper region 60a and the hydraulic pump 66 housed in the lower region 60b of the space 60 in the equipment housing chamber 59 are disposed with the third bracket 90 sandwiched therebetween. With such a configuration, it is possible to more effectively suppress oil adhering to the hydraulic pump 66 from adhering to the electric motor 62. As a result, the reliability of the electric motor 62 can be enhanced.

[4] In the working vehicle 1 according to the embodiment, in a preferred mode, the working vehicle 1 further includes the inverter 63. The inverter 63 is mounted on the third bracket 90.

By mounting the inverter 63 on the third bracket 90, the inverter 63 is housed in the same upper region 60a as the electric motor 62. With such a configuration, it is possible to suppress oil adhering to the hydraulic pump 66 from adhering to the inverter 63. As a result, the reliability of the inverter 63 can be enhanced.

Further, by mounting the electric motor 62 and the inverter 63 on the third bracket 90 and by assembling the hydraulic pump 66 below the third bracket 90, the electric motor 62, the inverter 63 and the hydraulic pump 66 can be formed into an assembly.

The electric wiring is connected between the electric motor 62 and the inverter 63 in advance. The assembly in such a state is mounted on the working vehicle 1, and the hydraulic piping is connected to the hydraulic pump 66, and the electric wiring is connected to from the inverter 63 to the battery unit 70. With such a configuration, the assembling property of the working vehicle 1 can be enhanced.

[5] In the working vehicle 1 according to the embodiment, in a preferred mode, the hydraulic pump 66 includes a plurality of hydraulic pumps 66a, 66b, 66c, and the hydraulic pumps 66a, 66b, 66c are connected in series. Further, in the case where the working vehicle 1 includes the plurality of hydraulic pumps 66a, 66b, 66c, and the hydraulic pumps 66a, 66b, 66c are connected in series, the length of the electric motor and hydraulic pump connected unit in the direction of the rotary shaft 621 is set longer than a length of an electric motor and hydraulic pump connected unit that is constituted of only one hydraulic pump 66 in the direction of the rotary shaft 621.

However, according to the working vehicle 1 of the embodiment, in the equipment housing chamber 59, the electric motor 62 and the hydraulic pump 66 are disposed such that the output shaft of the electric motor 62 and the input shaft of the hydraulic pump 66 are disposed in an extending manner in the vertical direction with respect to the working vehicle 1. With such a configuration, even in a case where the number of the hydraulic pumps 66 to be connected is increased, it is possible to efficiently arrange the electric motor and hydraulic pump connected unit in the equipment housing chamber 59.

That is, according to the embodiment, it is possible to provide the working vehicle 1 where, even in the case where the number of connected hydraulic pumps 66 is increased, the space in the equipment housing chamber 59 can be effectively used.

The present invention is not limited to the above-mentioned embodiment, and various modification can be carried out without departing from the gist of the present invention.

### [List of reference signs]

1: working vehicle
59: equipment housing chamber
62: electrically operated motor
621: rotary shaft
63: inverter
66, 66a, 66b, 66c: hydraulic pump
90: third bracket (bracket)

## Claims

1. A working vehicle comprising:
a hydraulic pump;
an electric motor for driving the hydraulic pump; and
an equipment housing chamber that houses the hydraulic pump and the electric motor, wherein
an output shaft of the electric motor is connected to an input shaft of the hydraulic pump, and
the electric motor is disposed either in an upward direction or in a downward direction with respect to the hydraulic pump.

2. The working vehicle according to claim 1, wherein the electric motor is disposed in the upward direction with respect to the hydraulic pump.

3. The working vehicle according to claim 1 or 2, further comprising a bracket for mounting the electric motor thereon, wherein
the electric motor is mounted on the bracket.

4. The working vehicle according to claim 3, further comprising an inverter that controls the electric motor, wherein
the inverter is mounted on the bracket.

5. The working vehicle according to one of the preceding claims, wherein
the hydraulic pump includes a plurality of hydraulic pumps, and
the hydraulic pumps are connected in series.
